# EUROPÄISCHE PATENTSCHRIFT

(11) **EP 2 318 735 B1**
(45) Veröffentlichungstag und Bekanntmachung des Hinweises auf die Patenterteilung: **06.06.2012**
(21) Anmeldenummer: 09780606.1
(22) Anmeldetag: 15.07.2009
(51) Int. Cl.: F16H 57/02, H02K 7/08

(54) **GETRIEBE-ANTRIEBSEINHEIT**
GEARBOX DRIVE UNIT
ENSEMBLE BOÎTE DE VITESSES-ENTRAÎNEMENT

(30) Priorität: 22.08.2008 DE 102008041443
(43) Veröffentlichungstag der Anmeldung: 11.05.2011
(73) Patentinhaber: Robert Bosch GmbH, 70442 Stuttgart (DE)
(72) Erfinder: HUCK, Thomas, 77836 Rheinmuenster (DE); ANDING, Lars-Dirk, 72202 Nagold (DE)
(86) Internationale Anmeldenummer: PCT/EP2009/059033
(87) Internationale Veröffentlichungsnummer: WO 2010/020483

(56) Entgegenhaltungen:
- EP-A- 1 837 979
- WO-A-01/63150
- DE-A1-102004 057 227

## Beschreibung

### Stand der Technik

Die Erfindung betrifft eine Getriebe-Antriebseinheit, insbesondere zum Verstellen beweglicher Teile in einem Kraftfahrzeug, vorzugsweise zum Verstellen eines Kraftfahrzeugfensters, gemäß dem Oberbegriff des Anspruchs 1.

Mit der gattungsgemäβen DE 10 2004 057 227 A1 ist eine Getriebe-Einheit für einen kleinen Motor bekannt geworden, bei dem ein motorisch angetriebenes Schneckenrad in einem Getriebegehäuse gelagert ist. Zur radialen Lagerung des Schneckenrads weist hierbei der Getriebegehäuseboden einen axialen Fortsatz auf, in dem eine drehfeste Welle für die Lagerung einer Ausgangswelle eingefügt ist.

Aus der DE 1 149 463 A1 ist eine Getriebe-Antriebseinheit bekannt, bei der ein Abtriebsrad drehbar auf einem gehäusefesten, massiven, aus Kunststoff ausgebildeten Lagerbolzen angeordnet ist. Für einige Anwendungen ist die Festigkeit des Kunststoff-Lagerbolzens verbesserungsbedürftig.

Daher sind Getriebe-Antriebseinheiten bekannt geworden, die einen aus Vollmaterial ausgebildeten Lagerbolzen aus Metall zur Lagerung des Abtriebsrades der Antriebs-Getriebeeinheit aufweisen. Dabei sind insbesondere das hohe Gewicht und die hohen Kosten für die Ausbildung des Lagerbolzens aus Vollmaterial von Nachteil.

### Offenbarung der Erfindung

### Technische Aufgabe

Der Erfindung liegt die Aufgabe zugrunde, eine bei ausreichender Festigkeit kosten-und gewichtsoptimierte Antriebs-Getriebeeinheit vorzuschlagen.

### Technische Lösung

Diese Aufgabe wird mit einer Getriebe-Antriebseinheit mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung verfolgt zwei getrennt oder bevorzugt in Kombination realisierbare Lösungsansätze zur Gewährleistung einer ausreichenden Festigkeit der Lagerachse und/oder der Verbindung zwischen Lagerachse und Getriebegehäuse bei einer gleichzeitigen Minimierung des Gewichts und der Herstellungskosten. So schlägt die Erfindung eine Getriebe-Antriebseinheit vor, bei der die Lagerachse abschnittsweise oder vollständig als Metallbolzen ausgebildet ist, der aus Gründen der Material- und Gewichtsersparnis zumindest abschnittsweise innen hohl, vorzugsweise als Hohlzylinder ausgebildet ist. Zusätzlich oder alternativ kann zur Gewichtsreduzierung der Getriebe-Antriebseinheit eine mehrteilige, insbesondere zweiteilige, Lagerachse aus einer Materialkombination Kunststoff/Metall realisiert werden, wobei dem Metallteil im Wesentlichen die Gewährleistung einer ausreichenden Festigkeit und dem Kunststoffteil im Wesentlichen eine Gewichts- und Kostenreduzierungsfunktion zukommt. Besonders bevorzugt ist es, wenn der mindestens eine, vorzugsweise ausschließlich eine, Metallteil der kombinierten Kunststoff/Metallachse abschnittsweise oder vollständig als hohler Metallbolzen, insbesondere als Hohlzylinder, zur weiteren Gewichtsminimierung ausgebildet ist.

Im Falle der Ausbildung der Lagerachse als kombinierte Kunststoff-/Metallachse ist die Lagerachse zweiteilig ausgeführt und weist ein Kunststoffunterteil sowie ein, vorzugsweise bolzenförmiges, oder zumindest abschnittsweise hohlzylindrisches, Metalloberteil auf. Somit können die benötigten Festigkeitswerte zum Festlegen einer kundenspezifischen Applikation im Bereich des freien Endes der Lagerachse gewährleistet werden.

Erfindungsgemäß ist das Kunststoffunterteil von einem Getriebegehäusefortsatz gebildet. Das Kunststoffunterteil der Lagerachse ist also einteilig mit dem, vorzugsweise aus Kunststoff gefertigten, Getriebegehäuse der Getriebe-Antriebseinheit ausgebildet.

Erfindungsgemäß weist der sich in axialer Richtung in Bezug auf die Lagerachse erstreckende Gehäusefortsatz die Form eines innen hohl ausgebildeten Gehäusedoms auf, im Bereich dessen freien Endes das Metalloberteil der Lagerachse festgelegt ist.

Ganz besonders bevorzugt ist dabei eine Ausführungsform der Getriebe-Antriebseinheit, bei der das, vorzugsweise als Schneckenrad ausgebildete Abtriebsrad als kombiniertes Abtriebs-/Mitnehmerrad mit integriertem Mitnehmerabschnitt zum Antreiben einer kundenspezifischen Applikation, vorzugsweise eines Seilzuges für einen Fensterheberantrieb, ausgebildet ist. Anders ausgedrückt ist es bevorzugt, die ansonsten mehrteilige Abtriebseinheit, umfassend ein Abtriebsrad, Dämpfungselemente sowie einen Mitnehmer, als einteiliges Abtriebsrad auszubilden, also das Abtriebsrad mit Mitteln zur unmittelbaren Drehmomentweitergabe sowie mit integralen Dämpfungsmitteln auszustatten.

In Weiterbildung der Erfindung ist mit Vorteil vorgesehen, dass entweder die gesamte Lagerachse oder ein Lagerachsenteil einer kombinierten Kunststoff/Metallachse durchgehend hohl, also rohrförmig ausgebildet ist, oder dass die Lagerachse bzw. ein Lagerachsenteil an einer einzigen Stirnseite oder an beiden Stirnseiten eine sich in axialer Richtung erstreckende Sacklochöffnung, vorzugsweise Sacklochbohrung, aufweist.

In Weiterbildung der Erfindung ist mit Vorteil vorgesehen, dass die Lagerachse im Bereich ihres freien Endes als Schnittstelle zum Festlegen einer, insbesondere kundenspezifischen Anwendungsapplikation ausgebildet ist. Hierzu weist die Lagerachse vorzugsweise Formschlussmittel und/oder ein Gewinde, etc. auf. Mit Vorteil ist eine im Bereich eines freien Endes der Lagerachse angeordnete Sacklochöffnung zum Festlegen einer kundenspezifischen Applikation, insbesondere eines Seilzugmechanismus, ausgebildet.

Es ist eine Ausführungsform der Getriebe-Antriebseinheit realisierbar, bei der das Abtriebsrad sowohl am Kunststoffunterteil als auch am Metalloberteil drehbar gelagert ist. Besonders bevorzugt ist jedoch eine Ausführungsform, bei der das Abtriebsrad ausschließlich am Kunststoffunterteil oder zumindest weitgehend am Kunststoffunterteil und nicht oder nur vernachlässigbar am Metallteil der das Abtriebsrad durchsetzenden Lagerachse gelagert ist.

In Weiterbildung der Erfindung ist mit Vorteil vorgesehen, dass das Metalloberteil der zweiteilig ausgebildeten Lagerachse aus Kunststoff und Metall formschlüssig am Kunststoffunterteil festgelegt ist. Dabei ist es besonders bevorzugt, wenn das Metalloberteil durch Umspritzen mit dem Kunststoffunterteil und damit bevorzugt mit dem Getriebegehäuse verbunden ist. Somit kann das Festlegen in einem gemeinsamen Arbeitsschritt mit der Herstellung des Getriebegehäuses im Spritzgussverfahren realisiert werden.

Besonders bevorzugt ist eine Ausführungsform, bei der das obere Metallteil der kombinierten Lagerachse aus Kunststoff und Metall eine untere Sacklochöffnung aufweist, die in einen von dem Gehäusedom bzw. dem Kunststoffunterteil der zweiteiligen Lagerachse radial außen begrenzten Hohlraum ausmündet, wodurch die Gewichtsersparnis und Materialersparnis der Getriebe-Antriebseinheit optimiert werden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine schematische Schnittdarstellung einer Getriebe-Antriebseinheit mit einer zweiteiligen Kunststoff-Metall-Lagerachse,
- Fig. 2: eine schematische Schnittdarstellung einer Getriebe-Antriebseinheit mit einer aus Metall ausgebildeten Lagerachse, die im Bereich ihres freien Endes eine Sacklochöffnung aufweist,
- Fig. 3: eine schematische Schnittdarstellung einer Getriebe-Antriebseinheit mit einer zweiteiligen La- gerachse, deren Metallteil zwei diametral gegenüberliegende Sacklochöffnungen aufweist, und
- Fig. 4: eine schematische Schnittdarstellung einer Getriebe-Antriebseinheit mit einer hohlzylindrischen Lagerachse aus Metall.

### Ausführungsformen der Erfindung

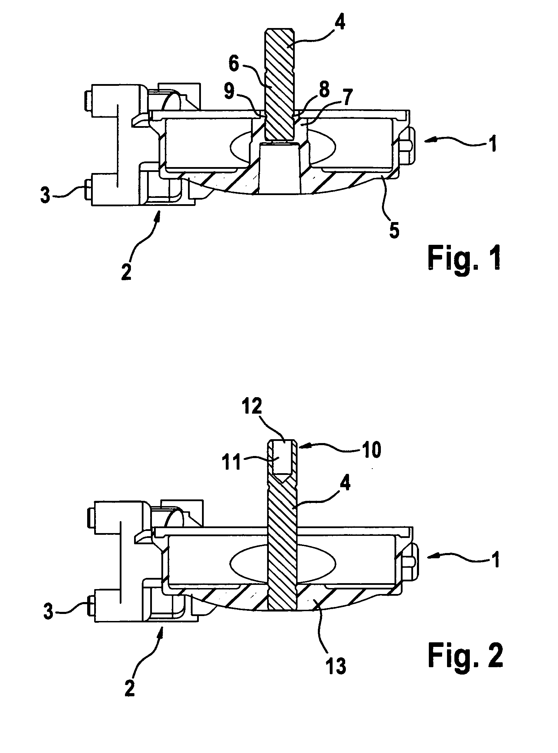

In Fig. 1 ist einer Schnittansicht ein Getriebegehäuse 1 aus Kunststoff einer Getriebe-Antriebseinheit 2 zum Verstellen eines Kraftfahrzeugfensters dargestellt. Das Getriebegehäuse 1 umfasst einen seitlichen Befestigungsflansch 3 zum Festlegen eines nicht gezeigten Polgehäuses eines ebenfalls nicht gezeigten Elektromotors der Getriebe-Antriebseinheit 2 zum Antreiben eines nicht gezeigten, drehbar auf einer Lagerachse 4 lagerbaren, als Schneckenrad ausgebildeten Abtriebsrades. Dabei ist das Abtriebsrad mit dem Elektromotor über eine drehfest auf der Ankerwelle sitzende Getriebeschnecke drehmomentübertragend gekoppelt.

Zu erkennen ist ein im Wesentlichen kreisrund konturierter, wannenförmiger Abschnitt 5 des Getriebegehäuses 1 zur Aufnahme des als Schneckenrad ausgebildeten Abtriebsrades. Zentrisch in diesem Abschnitt 5 befindet sich die Lagerachse 4, die bei dem Ausführungsbeispiel gemäß Fig. 1 zweiteilig ausgebildet ist und ein bolzenförmiges Metalloberteil 6 sowie ein Kunststoffunterteil 7 umfasst. Das Kunststoffunterteil 7 ist einteilig mit dem Getriebegehäuse 1 ausgebildet bzw. ist von einem domartigen, eine Durchgangsöffnung aufweisenden, also innen hohlen, Fortsatz des Getriebegehäuses 1 gebildet. Bei der Ausführungsform einer Getriebe-Antriebseinheit 2 gemäß Fig. 1 ist das Abtriebsrad ausschließlich am Kunststoffunterteil 7 gelagert, wohingegen das als Vollmateriallagerbolzen ausgebildete Metalloberteil 6 lediglich die Funktion hat, eine kundenspezifische Applikation zu halten und/oder einen drehmomentübertragend mit dem Abtriebsrad gekoppelten Mitnehmer zu lagern.

Wie sich aus Fig. 1 ergibt, ist das bolzenförmige Metalloberteil 6 formschlüssig mit dem Kunststoffunterteil 7 der Lagerachse 4 verbunden. In dem gezeigten Ausführungsbeispiel ist das Metalloberteil 6 durch Umspritzen an dem Kunststoffunterteil 7 festgelegt, wobei das Kunststoffunterteil 7 mit einem radial nach innen weisenden Ringfortsatz 8 unlösbar in eine korrespondierende Umfangsnut 9 am Außenumfang des Metalloberteils 6 der Lagerachse 4 eingreift.

Bei dem Ausführungsbeispiel gemäß Fig. 2 ist die Lagerachse 4 als einteiliger Metallbolzen ausgeführt, wobei in die Lagerachse 4 im Bereich ihres freien Endes 10 stirnseitig eine als Sacklochbohrung ausgeführte Sacklochöffnung 11 eingebracht ist. Diese dient zum einen als Schnittstelle zum Festlegen einer nicht gezeigten, kundenspezifischen Applikation, wozu die Sacklochöffnung 11 beispielsweise mit einem Innengewinde versehen ist. Die wesentliche Funktion der Sacklochöffnung 11 besteht jedoch darin, das Gewicht der Lagerachse 4 und damit der gesamten Getriebe-Antriebseinheit 2 bei gleichzeitiger Gewährleistung einer ausreichenden Festigkeit zu reduzieren. Wie sich aus Fig. 2 ergibt, ist die als Metallbolzen ausgebildete Lagerachse 4 formschlüssig durch Umspritzen in einem Gehäuseboden 13 des Getriebegehäuses 1 festgelegt.

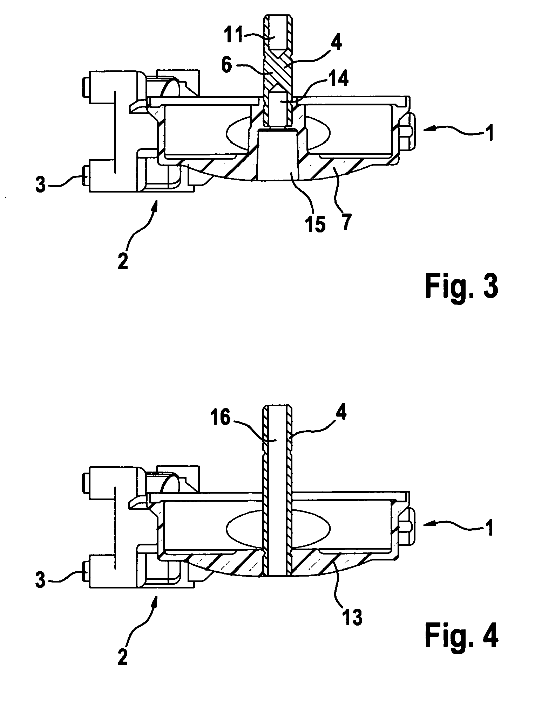

Das Ausführungsbeispiel gemäß Fig. 3 entspricht im Wesentlichen dem Ausführungsbeispiel gemäß Fig. 1, mit dem einzigen Unterschied, dass das Metalloberteil 6 der kombinierten Kunststoff-/Metall-Lagerachse 4 nicht als Vollmaterialmetallbolzen, sondern als abschnittsweise hohler Metallbolzen mit zwei einander gegenüberliegenden, stirnseitigen Sacklochöffnungen 11, 14 ausgebildet ist, wobei die in der Zeichnungsebene untere Sacklochöffnung 14 in einen von dem Kunststoffunterteil 7 der zweiteiligen Lagerachse 4 radial außen begrenzten Hohlraum 15 ausmündet.

Das Ausführungsbeispiel gemäß Fig. 4 entspricht im Wesentlichen dem Ausführungsbeispiel gemäß Fig. 2 mit dem einzigen Unterschied, dass die vollständig aus Metall ausgebildete Lagerachse 4 mit einer Durchgangsöffnung 16 versehen ist, sodass sich eine rohrförmige, hohlzylindrische Ausgestaltung der Lagerachse 4 und damit eine optimierte Gewichtsreduzierung bei ausreichenden Festigkeitswerten ergibt. Wie bei dem Ausführungsbeispiel gemäß Fig. 2 ist die als Metallbolzen ausgebildete Lagerachse 4 durch Umspritzen formschlüssig im Gehäuseboden 13 des Getriebegehäuses 1 der Getriebe-Antriebseinheit 2 festgelegt.

## Patentansprüche

1. Getriebe-Antriebseinheit, insbesondere zum Verstellen beweglicher Teile in einem Kraftfahrzeug, mit einem Getriebegehäuse (1), in dem ein Abtriebsrad auf einer sich senkrecht zu einem Gehäuseboden (13) erstreckenden Lagerachse (4) drehbar gelagert ist, wobei die Lagerachse (4) ein Kunststoffunterteil (7) aufweist und ein Metallbolzen vorgesehen ist, der ein an das Kunststoffunterteil (7) angrenzendes Metalloberteil (6) ist, wobei das Kunststoffunterteil (7) von einem Getriebegehäusefortsatz gebildet ist,
**dadurch gekennzeichnet,**
**dass** der Getriebe gehäusefortsatz als innen hohl ausgebildeter Gehäusedom ausgebildet ist, der eine Durchgangsöffnung entlang der Lagerachse (4) aufweist.

2. Getriebe-Antriebseinheit nach Anspruch 1,
**dadurch gekennzeichnet,**
**dass** die Lagerachse (4) durchgehend hohl ausgebildet ist, oder an mindestens einer Stirnseite, vorzugsweise an beiden Stirnseiten, eine Sacklochöffnung (11) aufweist.

3. Getriebe-Antriebseinheit nach einem der Ansprüche 1 oder 2,
**dadurch gekennzeichnet,**
**dass** die Lagerachse (4) im Bereich ihres freien Endes (10) als Schnittstelle zum Festlegen einer Anwendungsapplikation ausgebildet ist.

4. Getriebe-Antriebseinheit nach Anspruch 1,
**dadurch gekennzeichnet,**
**dass** das Abtriebsrad, vorzugsweise ausschließlich, am Kunststoffunterteil (7) drehbar gelagert ist.

5. Getriebe-Antriebseinheit nach einem der Ansprüche 1 oder 4,
**dadurch gekennzeichnet,**
**dass** das Metalloberteil (6) formschlüssig am Kunststoffunterteil (7) festgelegt ist.

6. Getriebe-Antriebseinheit nach Anspruch 5,
**dadurch gekennzeichnet,**
**dass** das Metalloberteil (6) durch Umspritzen mit Kunststoff am Kunststoffunterteil (7) festgelegt ist.

7. Getriebe-Antriebseinheit nach einem der Ansprüche 1 bis 6,
**dadurch gekennzeichnet,**
**dass** eine untere Sacklochöffnung (14) des Metalloberteils (6) in einen von dem Gehäusedom abschnittsweise begrenzten Hohlraum (15) ausmündet.

## Claims

1. Gearing-drive unit, in particular for adjusting movable parts in a motor vehicle, having a gearing housing (1) in which a drive output wheel is rotatably mounted on a bearing spindle (4) extending perpendicular to a housing base (13), wherein the bearing spindle (4) has a plastic lower part (7) and a metal pin is provided which is a metal upper part (6) adjoining the plastic lower part (7), wherein the plastic lower part (7) is formed by a gearing housing projection,
**characterized**
**in that** the gearing housing projection is formed as an internally hollow housing dome which has a through opening along the bearing spindle (4).

2. Gearing-drive unit according to Claim 1,
**characterized**
**in that** the bearing spindle (4) is of hollow design throughout or has a blind hole opening (11) at at least one end side, preferably at both end sides.

3. Gearing-drive unit according to either of Claims 1 and 2,
**characterized**
**in that** the bearing spindle (4) is formed, in the region of its free end (10), as an interface for defining an end-user application.

4. Gearing-drive unit according to Claim 1,
**characterized**
**in that** the drive output wheel is rotatably mounted preferably exclusively on the plastic lower part (7).

5. Gearing-drive unit according to either of Claims 1 and 4,
**characterized**
**in that** the metal upper part (6) is fixed in a positively locking manner to the plastic lower part (7).

6. Gearing-drive unit according to Claim 5,
**characterized**
**in that** the metal upper part (6) is fixed to the plastic lower part (7) by being encapsulated with plastic by injection moulding.

7. Gearing-drive unit according to one of Claims 1 to 6,
**characterized**
**in that** a lower blind hole opening (14) of the metal upper part (6) opens into a cavity (15) delimited in sections by the housing dome.

## Revendications

1. Unité d'entraînement de transmission, en particulier pour le réglage de pièces mobiles dans un véhicule automobile, comprenant un boîtier de transmission (1) dans lequel est monté rotatif un pignon de sortie sur un axe de palier (4) s'étendant perpendiculairement à un fond de boîtier (13), l'axe de palier (4) présentant une partie inférieure en plastique (7) et un boulon métallique étant prévu, lequel est une partie supérieure métallique (6) adjacente à la partie inférieure en plastique (7), la partie inférieure en plastique (7) étant formée par une saillie de boîtier de transmission,
**caractérisée en ce que**
la saillie de boîtier de transmission est réalisée sous forme de dôme de boîtier réalisé sous forme creuse à l'intérieur, qui présente une ouverture traversante le long de l'axe de palier (4).

2. Unité d'entraînement de transmission selon la revendication 1,
**caractérisée en ce que**
l'axe de palier (4) est réalisé sous forme creuse en continu, ou présente, au moins sur un côté frontal, de préférence sur les deux côtés frontaux, une ouverture en trou borgne (11).

3. Unité d'entraînement de transmission selon l'une quelconque des revendications 1 ou 2,
**caractérisée en ce que**
l'axe de palier (4) est réalisé dans la région de son extrémité libre (10) sous forme d'interface pour la fixation d'une application d'utilisation.

4. Unité d'entraînement de transmission selon la revendication 1,
**caractérisée en ce que**
le pignon de sortie, est monté à rotation de préférence exclusivement sur la partie inférieure en plastique (7).

5. Unité d'entraînement de transmission selon l'une quelconque des revendications 1 ou 4,
**caractérisée en ce que**
la partie supérieure métallique (6) est fixée par engagement par correspondance de forme sur la partie inférieure en plastique (7).

6. Unité d'entraînement de transmission selon la revendication 5,
**caractérisée en ce que**
la partie supérieure métallique (6) est fixée à la partie inférieure en plastique (7) par surmoulage de plastique.

7. Unité d'entraînement de transmission selon l'une quelconque des revendications 1 à 6,
**caractérisée en ce**
**qu'**une ouverture en trou borgne inférieure (14) de la partie supérieure métallique (6) débouche dans une cavité (15) limitée en partie par le dôme de boîtier.
